(19) **Europäisches Patentamt / European Patent Office / Office européen des brevets**

(11) **EP 3 287 244 A1**

(12) # EUROPÄISCHE PATENTANMELDUNG

(43) Veröffentlichungstag:
28.02.2018 Patentblatt 2018/09

(51) Int Cl.:
$B25J\ 9/16$ $^{(2006.01)}$

(21) Anmeldenummer: 16185877.4

(22) Anmeldetag: 26.08.2016

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
- **Bitterolf, David**
  **91056 Erlangen (DE)**
- **Puchtler, Thomas**
  **91325 Adelsdorf (DE)**
- **Tauchmann, Sven**
  **09119 Chemnitz (DE)**

(54) **RASTMOMENTKOMPENSATION BEI EINEM INDUSTRIEROBOTER**

(57) Bei einem Industrieroboter (1) sollen Abweichungen des Endeffektors (9) von einer programmierten (idealen) Bewegungsbahn bei der Bewegung des Endeffektors (9) entlang einer Bahn ($K_{RE}$, $K_{RS}$), die vor allem durch Rastmomente der Antriebe hervorgerufen werden, reduziert werden. Hierzu wird vorgeschlagen:
- eine Lernfahrt durchzuführen, bei der Abweichungen der realen Bahn ($K_{RE}$, $K_{RS}$) von der idealen Bahn ($K_I$) ermittelt werden,
- mittels eines inversen Modells des Industrieroboters (1) für die Abweichungen ursächliche Störmomente zu ermitteln,
- aus den Störmomenten Korrekturwinkel für die den Achsen des Industrieroboters (1) zugeführten Achswinkel zu ermitteln,
- den Industrieroboter (1) unter Berücksichtigung der Korrekturwinkel zu betreiben.

Die Erfindung bietet den Vorteil, dass bei dem Industrieroboter (1) programmierte Bahnen sehr viel genauer eingehalten werden können als bei herkömmlichen Industrierobotern.

FIG 1

EP 3 287 244 A1

**Beschreibung**

Die Erfindung betrifft ein Verfahren zum Steuern und/oder Regeln eines Industrieroboters, aufweisend mehrere bezüglich rotatorischer Achsen und mittels den Achsen zugeordneter Antriebe relativ zueinander verstellbare Einzelkörper und einen Endeffektor. Ferner betrifft die Erfindung einen Industrieroboter zur Durchführung eines derartigen Verfahrens.

In den Antriebsträngen eines Industrieroboters nachfolgend auch nur kurz als "Roboter" bezeichnet, werden in der Regel Planeten- oder Zykloiden-Getriebe eingesetzt. Solche Getriebe bieten in einem engen Bauraum eine relativ hohe Untersetzung (>200). Konstruktionsbedingt haben solche Getriebe aber den Nachteil, dass sich während einer Bewegung interne Kräfte bzw. Drehmomente bilden, z.B. Rastmomente, Kippmomente etc. Alle diese Kräfte und Drehmomente werden im weiteren Verlauf unter dem Begriff "Rastkräfte" zusammengefasst.

Die Rastkräfte wirken sich nach außen auf die Struktur des Roboters aus und führen zu Abweichungen am Endeffektor (Tool Center Point (TCP)) zwischen der programmierten Bahn und der realen, tatsächlich von dem Endeffektor ausgeführten Bahn.

Die Abweichungen von der Sollkontur können bis zu 0,5 mm Spitze-Spitze betragen. Bei der Bearbeitung eines Werkstücks mittels eines an dem Endeffektor befestigten Werkzeuges führen solche Amplituden zu sichtbaren, unerwünschten Marken auf der Werkstückoberfläche.

Nutrastmomente besitzen bei üblichen Werkzeugmaschinen (Drehmaschinen, Fräsmaschinen etc.), also nicht bei Industrierobotern, folgende Eigenschaften, die eine einfache Kompensation ermöglichen:

-  Die Störmomente entstehen sehr nah am Motormesssystem. D. h., dass die Nutrastmomente während einer langsamen Fahrt erfasst und mit einem angesteuerten Motordrehmoment kompensiert werden können. Auf diesem Weg ist es möglich, während einer langsamen Fahrt die verursachende Kraft direkt zu ermitteln, um bei schnelleren Fahrten die Kompensationskraft direkt vorsteuern zu können.

-  Nutrastmomente ergeben sich nur auf Grund tangentialer Kräfte im Motor. D. h., dass es nur ein Störmoment in derselben Richtung wie das Motormoment gibt. Somit ergeben sich nur Abweichungen in der Achsrichtung und der Gesamtfehler ist kompensierbar.

Bei einem Roboter unterscheidet sich das Phänomen auf folgende Weise von einer üblichen Werkzeugmaschine:

-  Die Abweichungen am TCP auf Grund der Rastkräfte finden nicht nur in der Achsrichtung, sondern auch senkrecht dazu statt.

-  Die Rastkräfte finden ihren Ursprung nicht am Motor, sondern im Getriebe. Die Rastkräfte wirken also nicht nur in Achsrichtung, sondern auch senkrecht dazu. Dies macht die Erfassung des Fehlers am Motormesssystem nur bedingt möglich.

-  Die Amplitude des Fehlers ist proportional zur Belastung des Getriebes.

Aus diesen Gründen müssen Abweichungen des Endeffektors eines Roboters von einer programmierten (idealen) Bewegungsbahn anders behandelt bzw. kompensiert werden als bei einer üblichen Werkzeugmaschine.

Aufgabe der Erfindung ist es, Abweichungen des Endeffektors eines Roboters von einer programmierten (idealen) Bewegungsbahn bei der Bewegung des Endeffektors entlang einer Bahn zu reduzieren.

Diese Aufgabe wird durch ein Verfahren mit den in Patentanspruch 1 angegebenen Verfahrensschritten gelöst. Ferner wird die Aufgabe gelöst durch einen Industrieroboter mit den in Patentanspruch 12 angegebenen Merkmalen.

Bei dem erfindungsgemäßen Verfahren zum Steuern und/oder Regeln eines Industrieroboters weist der Industrieroboter mehrere bezüglich rotatorischer Achsen und mittels den Achsen zugeordneter Antriebe relativ zueinander verstellbare Einzelkörper und einen Endeffektor auf. Die Einzelkörper sind in der Regel eine ortsfeste oder bezüglich wenigstens einer Linearachse verstellbare Basis, ein um eine vertikale Achse gegenüber der Basis schwenkbares Karussell sowie die Glieder eines an dem Karussell befestigten Roboterarms (Manipulators). Der Roboterarm ist über ein Gelenk, welches in der Regel eine in einer horizontalen Ebene liegende, rotatorische Achse bildet, mit dem Karussell verbunden. Je zwei benachbarte Glieder des Roboterarms sind über ein Gelenk, welches eine rotatorische Achse bildet, miteinander verbunden. An dem vordersten Glied des Roboterarms (dem letzten Glied der kinematischen Kette) ist ein sogenannter "Endeffektor" befestigt. Beispielsweise handelt es sich dabei um ein Werkzeug oder einen Greifer. Eine von dem Roboter auszuführende Bewegung wird in der Regel für den vordersten Punkt des Endeffektors, den Tool Center Point, kurz "TCP", festgelegt. Häufig kommt es jedoch nicht nur auf den Bahnverlauf des TCP, sondern auch auf die Orientierung des Endeffektors (beispielsweise eines Werkzeugs) an. Es wird daher der Bahnverlauf in allen 6 Dimensionen eines dem Roboter zugeordneten Koordinatensystems (mit in der Regel 3 translatorischen und 3 rotatorischen Freiheitsgraden) beschrieben.

Gemäß der Erfindung wird für wenigstens eine erste rotatorische Achse wenigstens einmal eine "Lernfahrt" durchgeführt. Dabei wird der Achswinkel der betreffenden Achse von einem Startwinkel bis zu einem Endwinkel, also um einen vorgegebenen Winkelbereich verstellt. Durch die Verstellung der Achse führt der Endeffektor in einem dem Roboter zugeordneten Koordinatensystem eine Bewegung entlang einer Bahn aus. Als "erste rotatorische Achse" kommt im Prinzip jede Achse des Roboters in Betracht. Vorzugseise handelt es sich bei der ersten rotatorischen Achse, für die die (erste) Lernfahrt durchgeführt wird, um die Achse zwischen dem Karussell und dem Manipulator.

Erfindungsgemäß werden bei der Lernfahrt für eine Vielzahl von Bahnpunkten anhand eines Modells des Industrieroboters ein von dem Antrieb der ersten rotatorischen Achse aufzubringendes, von dem Achswinkel abhängiges (ideales) Drehmoment zur Verstellung der Achse ermittelt und eine Abweichung der Position und/oder Orientierung der von dem Endeffektor ausgeführten Bahn von einer idealen Bahn in wenigstens einer Richtungen des Koordinatensystems in Abhängigkeit des Achswinkels und des Drehmoments ermittelt. Die Abweichung kann beispielsweise mittels eines Lasertrackers ermittelt werden. Vorteilhaft wird die Abweichung bezüglich aller Koordinaten des zugrunde liegenden Koordinatensystems (also vorzugweise bezüglich 3 translatorischer und 3 rotatorischer Koordinaten und damit die Abweichung bezüglich der Position und der Orientierung) erfasst. Insbesondere wird bei der Erfindung die Abweichung nicht oder zumindest nicht nur in der Bewegungsrichtung des Endeffektors erfasst. Es geht bei der Erfindung also vorrangig nicht darum, die eine Achse, die bei der Lernfahrt bewegt wird, zu kalibrieren.

Bei dem Modell des Roboters, aus dem das für den jeweiligen Achswinkel von dem Antrieb der betreffenden Achse aufzubringendes Drehmoment hervorgeht, handelt es sich beispielsweise um ein Mehrkörpermodell des Roboters. Ein derartiges Mehrkörpermodell erfasst:

- die Masseneigenschaften des Roboters (Masse und Schwerpunktslage der Einzelkörper bzw. Glieder);
- die Steifigkeit der Schnittstellen zwischen den Gliedern;
- die Kinematik des betreffenden Roboters.

Da im Zusammenhang mit der Erfindung kein dynamischer Vorgang simuliert wird, kann bei dem verwendeten Modell prinzipiell auf Trägheitstensoren verzichtet werden.

Eine ausführliche Beschreibung eines derartigen Modells ist beispielsweise der Druckschrift EP2954986A1 zu entnehmen. Die Erfindung ist jedoch nicht auf die Verwendung dieses Modells beschränkt.

Erfindungsgemäß wird anhand der Abweichung mittels eines (zu dem Modell des Roboters) inversen Modells des Roboters ein von dem Achswinkel der betrachteten, ersten rotatorischen Achse und dem Drehmoment abhängiges Störmoment in der wenigstens einen Richtung des Koordinatensystems ermittelt.

Das inverse Modell des Roboters ist insbesondere aus dem zugrunde liegenden Robotermodell durch bekannte mathematische Umformungen herleitbar.

Erfindungsgemäß werden nachfolgend für wenigstens eine der rotatorischen Achsen des Roboters, insbesondere eine von der ersten rotatorischen Achse verschiedene Achse des Roboters, mittels des Modells des Roboters von dem Achswinkel und dem Drehmoment der ersten rotatorischen Achse abhängige Korrekturwinkel zur Kompensation des Störmoments ermittelt.

Vorzugsweise werden die Korrekturwinkel jedoch für alle Achsen des Roboters ermittelt.

Ein nachfolgender Betrieb des Roboters erfolgt unter Berücksichtigung der in Bezug auf die Bewegung der ersten rotatorische Achse ermittelten Korrekturwinkel. Dies bedeutet, dass dem Roboter - abhängig von dem aktuellen Winkel und der aktuellen Belastung der ersten Achse - andere, korrigierte Winkel für die Rundachsen des Roboters zum Erreichen einer bestimmten Pose vorgegeben werden, als dies ohne die erfindungsgemäße Korrektur der Fall wäre.

Bei einer bevorzugten Ausführungsform der Erfindung werden anhand der Abweichung mittels des inversen Modells des Roboters ein von dem Achswinkel und einem normierten Drehmoment abhängiges normiertes Störmoment in der Richtung des Koordinatensystems ermittelt und nachfolgend die Korrekturwinkel in Abhängigkeit der normierten Störmomente bestimmt. Beispielsweise wird die unter einem bestimmten Winkel der ersten Rundachse gemessene Abweichung mittels des Modells des Roboters von der tatsächlich bei diesem Winkel vorliegenden Belastung auf ein normiertes Drehmoment, z.B. 1 Nm, normiert und das Störmoment bzw. die Korrekturwinkel für das normierte Drehmoment bestimmt. Beim nachfolgenden Betrieb des Roboters werden das tatsächliche Störmoment bzw. die tatsächlichen Korrekturwinkel ausgehend von dem normierten Drehmoment ermittelt.

Bei einer bevorzugten Ausführungsform der Erfindung wird eine Abweichung der Bahn in Abhängigkeit des Achswinkels in einer durch den Bahnverlauf bestimmten Bewegungsebene, senkrecht zu der jeweiligen Bewegungsrichtung ermittelt. In dieser Richtung stellt sich - bedingt durch die Rastkräfte des Getriebes - eine besonders große Abweichung der Soll-Bahn von der Ist-Bahn ein, die nachfolgend beim Betrieb des Roboters erfindungsgemäß korrigiert wird.

Bei einer bevorzugten Ausführungsform der Erfindung wird eine Abweichung der Bahn in Abhängigkeit des Achswinkels, senkrecht zu einer durch den Bahnverlauf bestimmten Bewegungsebene ermittelt. Auch in dieser Richtung stellt sich - bedingt durch die Rastkräfte des Getriebes - eine besonders große Abweichung der Soll-Bahn von der Ist-Bahn ein, die nachfolgend beim Betrieb des Roboters erfindungsgemäß korrigiert wird.

Vorteilhaft werden sowohl die Abweichung senkrecht zu der Bewegungsrichtung als auch senkrecht zu der Bewegungsebene ermittelt und die Korrekturwinkel derart bestimmt, dass beide Fehler (Abweichungen von der Ideal-Bahn) zugleich minimiert werden.

Bei einer bevorzugten Ausführungsform der Erfindung werden die Abweichungen jedoch bezüglich aller Basiskoordinaten des dem Roboter zugeordneten Bezugs-Koordinatensystems ermittelt, insbesondere Abweichungen sowohl in Bezug auf die Position als auch die Orientierung des Endeffektors, und die Korrekturwinkel derart bestimmt, dass eine Verbesserung der Genauigkeit bei der Bewegung des Roboters hinsichtlich alle Koordinaten erfolgt.

Bei einer bevorzugten Ausführungsform der Erfindung wird die Abweichung einer Frequenzanalyse unterzogen und für wenigstens eine dominante Wellenlänge wird die Amplitude der Abweichung bestimmt. Es zeigt sich, dass die bei der Lernfahrt ermittelten Abweichungen periodisch sind und die Abweichungen ihre Maxima bzw. Minima bei Vielfachen eines oder mehrerer "Grundwinkel" haben. Es wird dann zu jedem Grundwinkel eine normierte Amplitude ermittelt, aus der sich für einen bestimmten Winkel und eine bestimmte Last der jeweils betrachteten Achse leicht die konkrete Abweichung bestimmen lässt. Aus einer einmal durchgeführten Lernfahrt können so die Abweichungen in einfacher Weise für alle möglichen Lasten und Achswinkel ermittelt, insbesondere errechnet werden.

Bei einer bevorzugten Ausführungsform der Erfindung wird so die Abweichung anhand einer normierten Amplitude der dominanten Wellenlänge bzw. der normierten Amplituden mehrerer dominanter Wellenlängen bestimmt.

Bei einer bevorzugten Ausführungsform der Erfindung werden die Achsen des Roboters ausgehend von der Roboter-Basis entlang der kinematischen Kette als Rundachse R1, Rundachse R2 etc. bis Rundachse Rn bezeichnet, wobei es sich bei der ersten Rundachse, für die eine Lernfahrt durchgeführt wird, vorzugsweise um die Rundachse R2 des Roboters handelt.

Bei einer bevorzugten Ausführungsform der Erfindung wird das Verfahren nicht nur für eine erste Rundachse, insbesondere die Rundachse R2, durchgeführt, sondern für eine zweite Rundachse, insbesondere die Rundachse R3, wiederholt. Auch für R3 wird demnach eine entsprechende Lernfahrt durchgeführt und in deren Folge entsprechende Korrekturwinkel ermittelt.

Bei einer bevorzugten Ausführungsform der Erfindung wird das Verfahren weiterhin für eine dritte Rundachse, insbesondere die Rundachse R4 wiederholt. Zusätzlich zu R2 und R3 wird demnach auch für R4 eine entsprechende Lernfahrt durchgeführt und in deren Folge entsprechende Korrekturwinkel ermittelt.

Es sei an dieser Stelle angemerkt, dass es bei den "Lernfahrten" nicht auf die Reihenfolge der betrachteten Achsen ankommt. So könnte das Verfahren beispielsweise auch mit Achse R4 als erster Achse und Achse R2 als zweiter Achse durchgeführt werden.

Bei einer bevorzugten Ausführungsform der Erfindung wird der Winkelbereich, den eine bestimmte Achse bei der Lernfahrt durchfährt, derart gewählt, dass beim Verstellen der Achse um den Winkelbereich ein minimales und ein maximales Drehmoment erfasst werden. Ein Maximum ergibt sich in der Regel dann, wenn der Schwerpunkt der an der Achse angreifenden Last in einer horizontalen Ebene mit der Achse liegt. Eine minimale Last, nämlich die Last 0, ergibt sich dann, wenn der Schwerpunkt der an der Achse angreifenden Last senkrecht über der Achse steht. Bei einem derart ausgewählten Winkelbereich wird somit die Abweichung für die größtmögliche und die kleinstmögliche Last bestimmt. Die Abweichungen für alle anderen Lastfälle können somit mittels des Robotermodells besonders genau ermittelt werden.

Die Erfindung wird nachfolgend anhand von Ausführungsbeispielen erläutert. Es zeigen:

FIG 1 einen Roboter bei der Durchführung einer Lernfahrt,
FIG 2 den Roboter bei der Durchführung der Lernfahrt in einer Draufsicht,
FIG 3 Abweichungen senkrecht zur Kreisebene und in der Kreisebene sowie das Drehmoment über dem Achswinkel,
FIG 4 Abweichungen senkrecht zur Kreisebene sowie eine Fourier-Analyse,
FIG 5 die Abweichung in Bezug auf 3 Grundwinkel,
FIG 6 die Abweichung in Bezug zu dem Drehmoment,
FIG 7 die Verfahrensschritte bei der Durchführung eines erfindungsgemäßen Verfahrens,
FIG 8 eine Recheneinrichtung zur Durchführung eines erfindungsgemäßen Verfahrens.

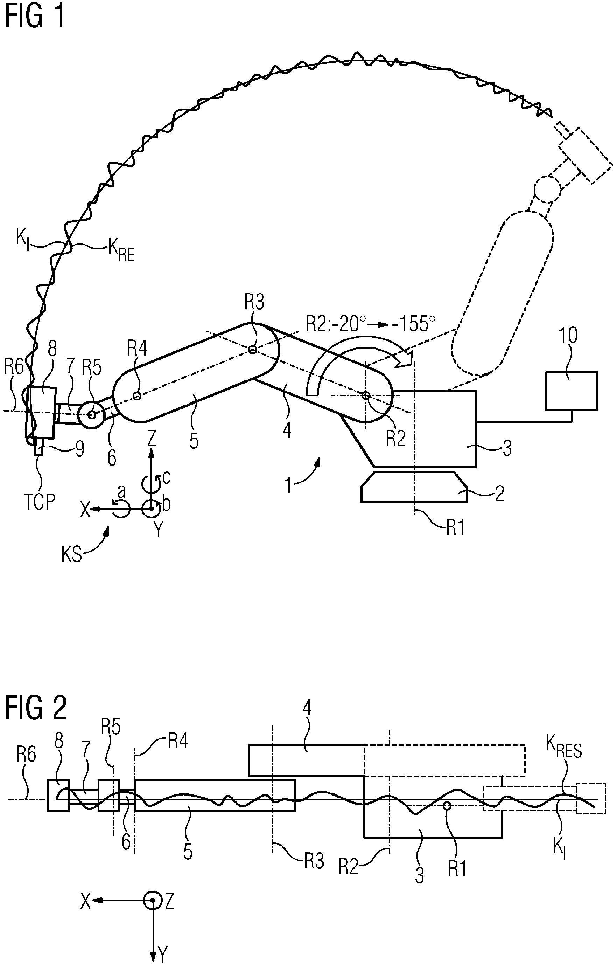

Figur 1 zeigt einen Industrieroboter (Roboter) 1, der eine ortsfeste Basis 2 aufweist. Die Basis 2 ist über eine vertikal ausgerichtete rotatorische Achse R1 mit einem sog. Karussell 3 verbunden. An dem Karussell 3 ist ein Roboterarm (Manipulator) mittels einer rotatorischen Achse R2 drehbar befestigt. Der Manipulator umfasst die Glieder 4, 5, 6, 7 und 8. Je zwei benachbarte Glieder sind mittels einer zwischen den Gliedern befindlichen rotatorischen Achse R3, R4, R5 und R6 relativ zueinander verstellbar, insbesondere drehbar. Das in der kinematischen Kette vorderste Glied 8 ist gleichsam als Werkzeughalter für das Werkzeug 9 ausgebildet. Das lose Ende des Werkzeugs 9 wird als Tool Center Point (TCP) bezeichnet.

Dem Roboter 1 ist im Ausführungsbeispiel ein in Bezug zur Basis 2 ortsfestes kartesisches Koordinatensystem KS mit den Achsen x, y und z zugeordnet. Das Koordinatensystem KS umfasst weiterhin die den Achsen x, y und z zugeordneten rotatorischen Achsen a, b und c. Damit sind Position und Orientierung des Werkzeugs 9 in allen 6 Dimensionen des Koordinatensystems KS bestimmbar.

Dem Roboter 1 ist ferner eine numerische Steuerung 10 zugeordnet, mittels der bezüglich aller 6 Achsen des Roboters 1 bestimmte Winkel einstellbar sind. Wird jeder Achse R1 bis R6 ein bestimmter Winkel zugewiesen und werden die betreffenden Achsen R1 bis R6 entsprechend eingestellt, so befindet sich der Roboter 1 in einer bestimmten Pose.

Gemäß der Erfindung wird mit dem Roboter 1 - gesteuert durch die Steuerung 10 - zunächst eine Lernfahrt ausgeführt. Dabei wird genau eine Achse (und nur diese) um einen bestimmten Winkelbereich gedreht. Im Ausführungsbeispiel wird die Rundachse R2 ausgehend von dem Winkel -20° langsam und gleichmäßig bis zum Winkel -155° gedreht. Die Endstellung ist in Figur 1 durch die gepunktete Darstellung des Roboters 1 veranschaulicht.

Durch die Drehung der Achse R2 des Roboters 1 führt der TCP im Idealfall eine Kreisbewegung um den entsprechenden Winkelbereich aus. Dies ist in Figur 1 durch den Kreisausschnitt $K_I$ veranschaulicht. Durch Ungenauigkeiten in der Mechanik des Roboters 1, aus denen insbesondere die eingangs erwähnten Rastkräfte resultieren, bewegt sich der TCP jedoch nicht exakt auf der idealen Kreisbahn $K_I$, sondern weicht davon ab. In der Zeichenebene bewegt sich der TCP daher nicht ideal entlang der Kreislinie $K_I$, sondern er bewegt sich entlang der realen Kreislinie $K_{RE}$. Die reale Bewegung des TCP kann beispielsweise mittels eines Lasertrackers erfasst werden.

Figur 2 veranschaulicht die gleiche Situation in einer Draufsicht, wobei jedoch nicht die Abweichung des TCP in der Kreisebene, sondern die Abweichung des TCP senkrecht zu der Kreisebene veranschaulicht wird. So sind der Figur 2 die ideale Kreislinie $K_I$ (in der Draufsicht als Linie dargestellt) sowie die reale Kreislinie $K_{RS}$ mit den Abweichungen senkrecht zu der Kreisebene entnehmbar.

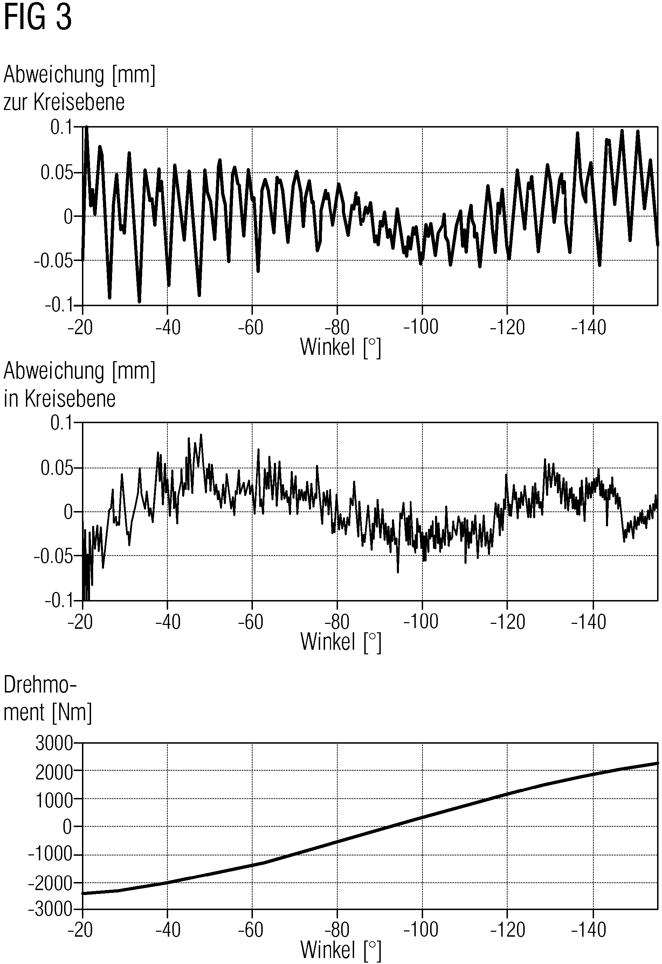

In Figur 3 ist die Abweichung des TCP über dem Winkel aufgetragen und zwar in dem oberen Diagramm für die Abweichung senkrecht zur Kreisebene und im unteren Diagramm die Abweichung in der Kreisebene. Die Achse R2 bewegt sich vom Winkel -20° zum Winkel -155°. Dabei wird die absolute Lage des TCP mit Hilfe eines Lasertrackers gemessen. Nach Abzug einer idealen, kreisförmigen Bahn $K_I$ von der gemessen Bahn $K_{RE}$ bzw. $K_{RS}$ wird der Fehler in der Kreisebene und senkrecht zur Kreisebene gerechnet und in den beiden oberen Diagrammen veranschaulicht.

Die Messung wurde im Ausführungsbeispiel während einer Bewegung der Achse R2 mit konstanter Drehzahl (0,278 U/Min) realisiert. Die Abweichungen zeigen zunächst zwei dominante Eigenschaften: sie sind ortsfest und periodisch.

Der periodische Fehler senkrecht zur Kreisebene setzt sich bei einer Vorschubgeschwindigkeit von 0,278 U/Min hauptsächlich aus drei Frequenzanteilen zusammen:

- 0,24 Hz: Grundfrequenz
- 0,48 Hz: Zweifache Grundfrequenz
- 0,96 Hz: Vierfache Grundfrequenz

Bei dem genannten Vorschub entsprechen diese Frequenzen im Ausführungsbeispiel folgenden Winkeln:

| Frequenz [Hz] | Lastwinkel [°] | Motorwinkel [°] |
|---|---|---|
| 0,24 | 6,95 | 1278 |
| 0,48 | 3,48 | 639 |
| 0,96 | 1,74 | 319 |

Wie aus dem unteren Diagramm aus Figur 3 ebenfalls hervorgeht, ist die Amplitude der Abweichung nicht konstant über dem Weg. Es ist auffällig, dass je größer die Belastung des Getriebes auf Grund der Schwerkraft ist, desto größer ist die Amplitude der Abweichung am TCP. Entsprechend sind die Abweichungen bei dem Nulldurchgang des veranschaulichten Drehmoments am geringsten. Die Abweichungen zeigen somit als weitere dominante Eigenschaft, dass sie lastabhängig sind.

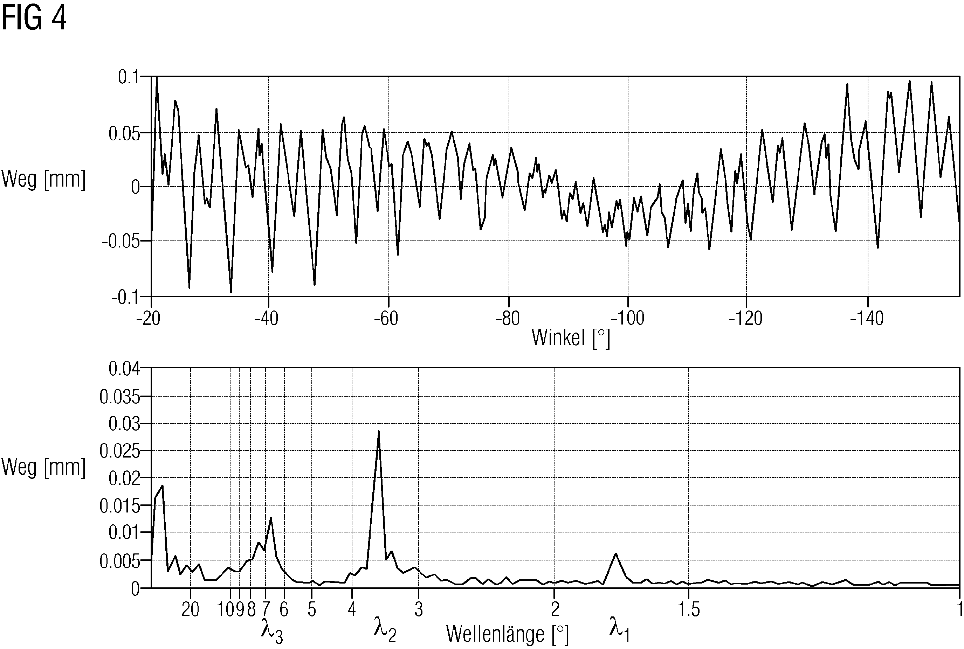

Die folgende Abbildung gemäß Figur 4 zeigt eine Analyse des periodischen Fehlers senkrecht zur Kreisebene. Im oberen Diagramm ist nochmals die Abweichung senkrecht zur Kreisebene veranschaulicht. Dem unteren Diagramm von Figur 4 ist eine Fourier-Zerlegung der gemessenen Abweichung zu entnehmen. Die Fourier-Zerlegung zeigt die Amplitude der einzelnen "Frequenzanteile", wobei in diesem Fall keine Frequenzen untersucht werden, sondern Wellenlängen.

Die Anteile mit folgenden Wellenlängen sind in dem Fehlerverlauf dominant:

- 7,0°
- 3,5°
- 1,75°

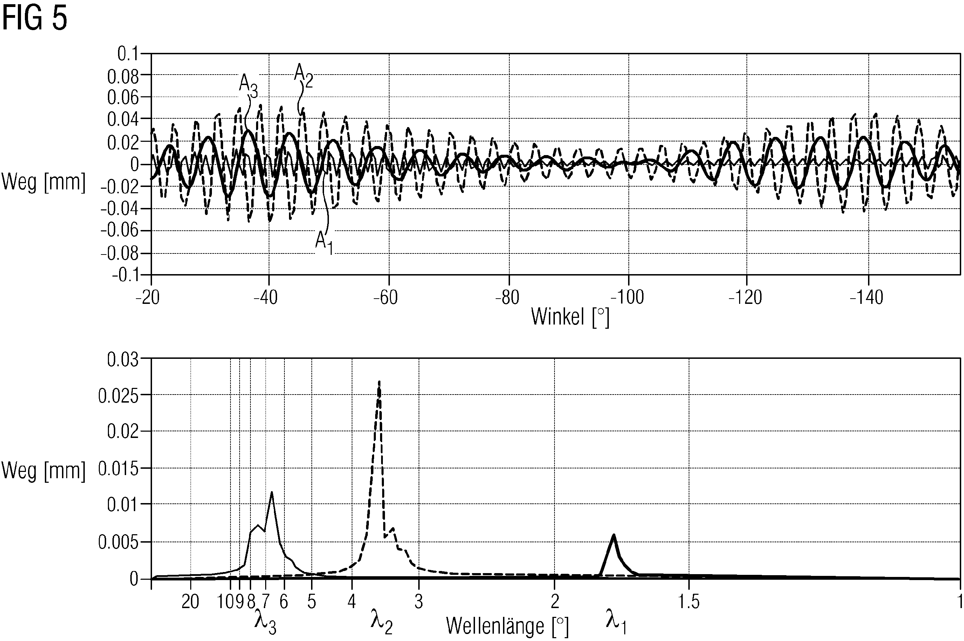

Das heißt, der Fehler kann im Wesentlichen in drei Anteile zerlegt werden. Dies ist in Figur 5 veranschaulicht, bei der die Fehler anderer Wellenlängen herausgefiltert wurden. Jeder Anteil kann mit Hilfe einer trigonometrischen Funktion dargestellt werden.

Allgemein gilt:

$$\Delta x(\theta_2) = \sum_{i=1}^{n} A_i(\theta_2) \sin\left( 2\pi \frac{\theta_2}{\lambda_i} + \varphi_i \right)$$

Dabei sind:

$\Delta x(\theta_2)$ der Gesamtfehler als Funktion des Winkels der Achse 2, zusammengesetzt aus der Summe der dominanten Anteile, im Beispiel für n=3, d.h. die ersten 3 dominanten Anteile
$A_i(\theta_2)$ die Amplitude des Anteils i als Funktion des Winkels der Achse R2
$\lambda_i$ die Wellenlänge des Anteils i
$\varphi_i$ die Phasenverschiebung des Anteils i

Im oberen Diagramm sind die Amplituden $A_1$, $A_2$, und $A_3$ für die dominanten Wellenlängen $\lambda_1 = 1,75°$, $\lambda_2 = 1,75°$ und $\lambda_3 = 1,75°$ veranschaulicht, im Diagramm darunter die dominanten Wellenlängen selbst.

Das Besondere an diesem Ausführungsbeispiel ist, dass die Amplituden $A_i$ mit Hilfe eines Modells gerechnet werden. Aus der Messung hat sich gezeigt, dass $A_i$ proportional zum Lastmoment auf dem Getriebe ist.

$$A_i(\theta_2) = \alpha_i M_{Last}(\theta_2) + \beta_i$$

Dabei sind:

$\alpha_i$ "Normierte" Amplitude des Anteils i, unabhängig vom Winkel = Amplitude des Fehler für 1Nm Lastmoment
$\beta_i$ der Gleichanteil

Die Bestimmung der normierten Amplitude $\alpha_i$, die unabhängig von der Last und dem Achswinkel ist, hat den Vorteil, dass sich die nachfolgende Berechnung der Abweichung für eine konkrete Last und einen konkreten Winkel stark vereinfacht. Die normierte Amplitude muss dann lediglich mit der Last-Matrix für den jeweiligen Winkel multipliziert werden.

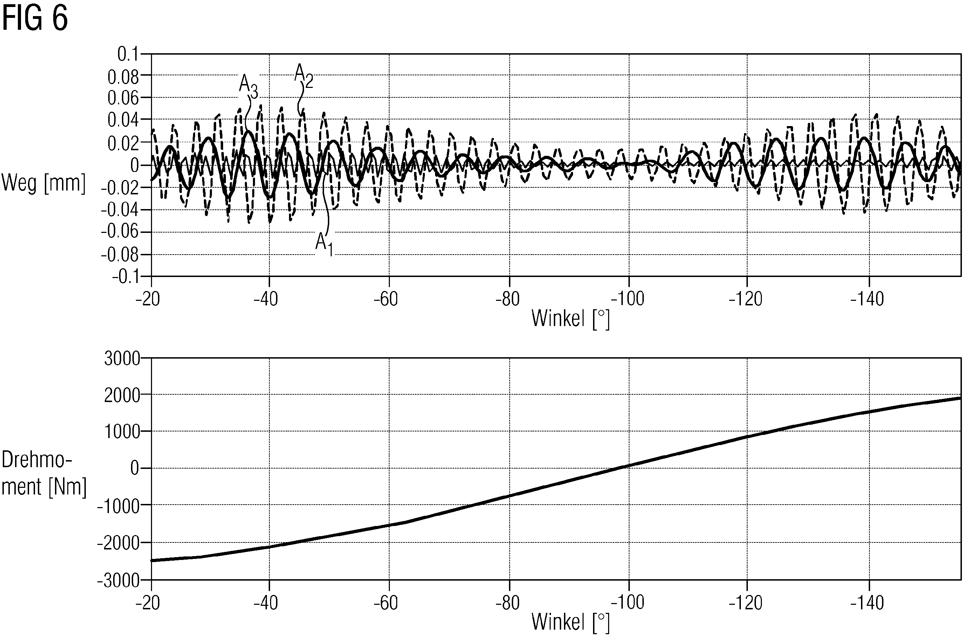

Die folgenden Abbildungen gemäß Figur 6 veranschaulichen den Verlauf der 3 dominanten Anteile in Relation zu dem Verlauf des Lastmomentes. Wie bereits Figur 3 verdeutlichte, zeigt sich auch hier, dass die Amplitude der Abweichung immer da am kleinsten ist, wo das Lastmoment im Betrag am kleinsten ist, insbesondere wo letzteres einen Nulldurchgang aufweist.

Im Grunde ist das Lastmoment $M_{Last}$ eine Funktion der Achswinkel aller Achsen. Um die Darstellung zu vereinfachen wird nur $\theta_2$ geschrieben.

Die erfindungsgemäße Lösung zur Korrektur bzw. Verringerung der Abweichungen des TCP geht von folgenden Voraussetzungen aus:

- Die Rastkräfte sind ortsfest
- Die Rastkräfte sind periodisch
- Die Amplitude der Rastkräfte ist proportional zur Belastung des Getriebes
- Ein Mehrkörpermodell des Roboters ist vorhanden.

Das Mehrkörpermodell des Roboters umfasst:

- Die Masseneigenschaften des Roboters (Masse und Schwerpunktslage der Glieder)
- Die Steifigkeit der Schnittstellen zwischen den Gliedern.
- Die Kinematik des Roboters

Da kein dynamischer Vorgang simuliert wird, kann prinzipiell auf Trägheitstensoren verzichtet werden.

Im Ausführungsbeispiel wird auf das aus der EP2954986A1 bekannte Robotermodell zurückgegriffen.

Das mathematische Modell des Roboters ist ein Differentialgleichungssystem der zweiten Ordnung.

$$M\ddot{X} + D\dot{X} + KX = T^{T} f$$

M ist die Massenmatrix,

D die Dämpfungsmatrix,

*K* die Steifigkeitsmatrix,

T die Transformationsmatrix, die die Beziehung zwischen den linear unabhängigen Zustandsgrößen X und den Eingangsknoten des Systems, an denen die Außen-, bzw. Störmomente wirken (z.B. Motormomente oder Getriebemomente als Störmomente). Mit Hilfe der Matrix T werden die Momente auf den Zuständen des Systems verteilt. In der Regel ist X der Vektor der Freiheitsgrade aller (Einzel-) Körper des Systems.

Jeder Körper ist in sich starr und besitzt genau sechs Freiheitsgrade (3 Translationen und 3 Rotationen). Der Vektor f ist der Vektor der Außenkräfte.

Der Zustandsvektor X beschreibt die kleinen Bewegungen um den ursprünglichen Arbeitspunkt herum. Somit sind die Matrizen M, *D, K* und *T* von den Zustandsgrößen unabhängig. Die Gelenkstellung ist keine Zustandsgröße, sondern weiterer Parameter für die Berechnung der Matrizen M, *D, K* und *T.*

Im Fall der Rastkompensation wird das System statisch gelöst, d. h., die erste und zweite Ableitung von X sind 0.

$$KX = T^{T} f$$

Die zu kompensierenden Abweichungen werden an den Messsystemen nicht erfasst und die Motoren leisten keine Kraft bzw. Drehmomente dagegen. Die Motoren werden also in dem Modell blockiert. Die Bewegung des Motors kann als lineare Kombination der Elemente von X mit Hilfe einer Matrix $T_{Mot}$ gerechnet werden. Die Matrix $T_{Mot}$ ist bekannt.

$$0 = T_{Mot} X$$

Anhand dessen wird einer neuen Matrix $C_{Mot}$ gerechnet:

$$X = C_{Mot} X_{R}$$

wobei $X_{R}$ der Vektor der Freiheitsgrade des Systems ohne die Motoren ist.

Nun wird die Störkraft ermittelt, die zur Abweichung $\alpha_i$ führt.

Das System im Gelichgewicht erfüllt folgendes Gleichungssystem:

$$\begin{cases} KX = T_{G}^{T} f_{\alpha i} \\ T_{TCP} X = \alpha_{i} \\ X = C_{Mot} X_{R} \end{cases}$$

Dabei sind:

$T_G^T$ die Matrix der Projektion der Störkraft auf den Freiheitsgraden des Systems (bekannt)
$f_{\alpha i}$ die Amplitude der Störkraft (unbekannt)
$T_{TCP}$ die Projektion aller Freiheitsgrade des Systems auf die Richtung, in der der Fehler gemessen wird (hier senkrecht zur Kreisebene)
$X_R$ die Freiheitsgrade des Systems mit blockierten Motoren

Aus den 2 letzten Gleichungen ergibt sich:

$$T_{TCP} C_{Mot} X_R = \alpha_i$$

Eine solche Gleichung bedeutet, dass das System erneut einen Freiheitsgrad verliert. Es ergibt sich ein neuer Vektor $X_{Ri}$ der reduzierten Freiheitsgrade des Systems:

$$X_R = C_{\alpha_i} X_{Ri}$$

Es ergibt sich ferner aus der ersten Gleichung ein reduziertes Gleichungssystem:

$$KC_{Mot}C_{\alpha_i} X_{Ri} = T_G^{\,T} f_{\alpha i}$$

$$\Leftrightarrow \begin{bmatrix} -T_G^{\,T} & KC_{Mot}C_{\alpha_i} \end{bmatrix} \begin{pmatrix} f_{\alpha i} \\ X_{Ri} \end{pmatrix} = 0$$

Das erste Element des Lösungsvektors ist dann das Störmoment auf dem Getriebe, das zur Abweichung $\alpha_i$ führt.
Es werden für allen $\alpha_i$ und $\beta_i$ die dazu passenden Momente gerechnet und es ergibt sich eine neue Formel für die Summe aller wirkenden Momente:

$$F_{\Delta x}(\theta_2) = \sum_{i=1}^{n} \left( f_{\alpha i} M_{Last}(\theta_2) + f_{\beta i} \right) \sin\left( 2\pi \frac{\theta_2}{\lambda_i} + \varphi_i \right)$$

Nun werden die Kompensationswerte für die Motoren gerechnet, damit Abweichungen des TCP verhindert werden. In diesem Fall sind die Motoren nicht mehr blockiert.

$$\begin{cases} KX = T_G^{\,T} F_{\Delta x} + T_{Mot}^{\,T} F_{Mot} \\ T_{TCP} X = 0 \end{cases}$$

Dabei wird das Gleichgewicht zwischen Motor- und Störmomenten betrachtet; $F_{Mot}$ ist unbekannt.
Das System ist am TCP "blockiert". Daher weist das System am TCP keine Abweichung auf.
Alle Matrizen wurden bereits beschrieben und es resultiert:

$$X = C_{TCP} X_{TCP}$$

Daraus ergibt sich weiterhin:

$$\begin{bmatrix} -T_{Mot} & KC_{TCP} \end{bmatrix} \begin{pmatrix} F_{Mot} \\ X_{TCP} \end{pmatrix} = T_G{}^T F_{\Delta x}$$

$$\Leftrightarrow \begin{pmatrix} F_{Mot} \\ X_{TCP} \end{pmatrix} = \begin{bmatrix} -T_{Mot} & KC_{TCP} \end{bmatrix}^{-1} T_G{}^T F_{\Delta x}$$

$F_{Mot}$ sind die Drehmomente an den Motoren und $X_{TCP}$ beschreibt die Verformung des Systems. Darunter fällt u.a. die Verstellung der Motoren.

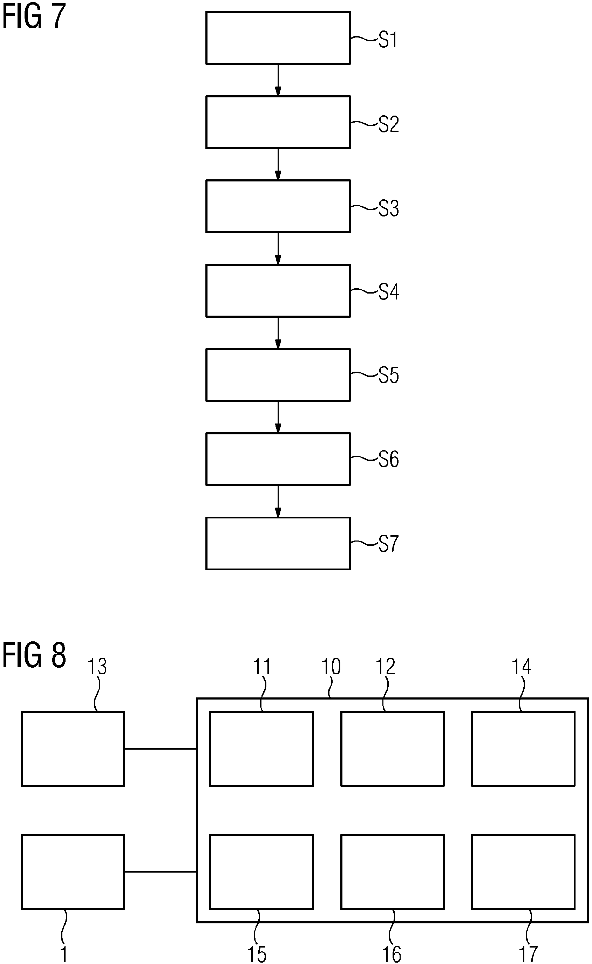

In Figur 7 sind beispielhaft wesentliche Verfahrensschritte bei der Durchführung eines erfindungsgemäßen Verfahrens veranschaulicht:

- In einem Verfahrensschritt S1 wird bei einer ersten rotatorischen Achse der Achswinkel um einen vorgebbaren Winkelbereich verstellt, so dass der Endeffektor aufgrund der Verstellung der Achse in einem dem Industrieroboter zugeordneten Koordinatensystem eine Bewegung entlang einer Kreisbahn ausführt.

- In einem Verfahrensschritt S2 wird anhand eines Modells des Industrieroboters ein von dem Antrieb der ersten rotatorischen Achse aufzubringendes, von dem Achswinkel abhängiges Drehmoment zur Verstellung der Achse ermittelt.

- In einem Verfahrensschritt S3 wird die Abweichung der Position und/oder Orientierung der von dem Endeffektor ausgeführten Bahn von einer idealen Bahn in wenigstens einer Richtung des Koordinatensystems und in Abhängigkeit des Achswinkels und des Drehmoments ermittelt.

- In einem Verfahrensschritt S4 wird die Abweichung einer Frequenzanalyse unterzogen und für wenigstens eine dominante Wellenlänge die Amplitude der Abweichung bestimmt.

- In einem Verfahrensschritt S5 wird eine normierte Amplitude für die dominante Wellenlänge bestimmt.

- In einem Verfahrensschritt S6 wird aus der normierten Amplitude für die dominante Wellenlänge wenigstens ein normiertes Störmoment bestimmt.

- In einem Verfahrensschritt S7 werden anhand des normierten Störmoments in Abhängigkeit von dem aktuellen Achswinkel und dem aktuellen Drehmoment der ersten rotatorischen Achse Korrekturwinkel für mehrere, insbesondere alle Achsen des Industrieroboters ermittelt und der Industrieroboter unter Berücksichtigung der Korrekturwinkel betrieben.

Vorteilhaft wird das Verfahren nicht nur für die erste, sondern wenigstens für eine weitere, insbesondere für alle Rundachsen des Industrieroboters angewendet.

Die Nachfolgende Steuerung des Industrieroboters während des normalen Betriebs erfolgt dann unter Berücksichtigung aller wie aufgezeigt ermittelten Korrekturwinkel, womit Abweichungen des TCP von einer idealen Bahn deutlich reduziert werden.

In Figur 8 ist die numerische Steuerung 10 des Industrieroboters 1 gemäß Figur 1 näher veranschaulicht. Diese umfasst eine Regelungseinrichtung 11 zur geregelten Verstellung der Achswinkel des Roboters.

Mittels einer Drehmomentermittlungseinrichtung 12 wird während einer Lernfahrt, bei der genau eine rotatorische Achse des Roboters um einen vorbestimmten Winkelbereich gedreht wird, ein von dem Antrieb der Achse aufzubringendes, von dem Achswinkel abhängiges Drehmoment zur Verstellung der Achse anhand eines Robotermodells ermittelt.

Mittels einer Messeinrichtung 13, die insbesondere einen Lasertracker umfasst, werden achswinkelabhängige Abweichungen des Endeffektors 9 (siehe FIG 1) von einer idealen Bahn bei der Bewegung des Endeffektors 9 entlang der Bahn erfasst.

Mittels einer Störmomentermittlungseinrichtung 14 werden anhand einer Abweichung der Bahn mittels eines inversen Modells des Industrieroboters 1 einen von dem Achswinkel und dem Drehmoment abhängigen Störmomentverlauf ermittelt.

Eine Korrekturwinkelermittlungseinrichtung 15 ermittelt Korrekturwinkeln für wenigstens eine der rotatorischen Achsen des Industrieroboters in Abhängigkeit von dem Achswinkel und dem Drehmoment der ersten rotatorischen Achse und in Abhängigkeit des Störmomentverlaufs.

Mittels einer Störmomentkompensationseinrichtung 16 werden während des Betriebs des Industrieroboters Störmomente des Antriebs durch die Regeleinrichtung unter Berücksichtigung der Korrekturwinkel kompensiert. Vorteilhaft werden mittels der Störmomentermittlungseinrichtung normierte Störmomente ermittelt.

Die numerische Steuerung 10 gemäß dem Ausführungsbeispiel umfasst ferner eine Analyseeinrichtung 17, mittels der die gemessenen Abweichungen einer Frequenzanalyse unterzogen werden und für wenigstens eine dominante Wellenlänge die Amplitude der Abweichung bestimmt wird. Insbesondere wird mittels der Analyseeinrichtung 17 eine normierte Amplitude der Abweichung bestimmt.

Die Drehmomentermittlungseinrichtung 12, die Störmomentermittlungseinrichtung 14, die Korrekturwinkelermittlungseinrichtung 15, die Störmomentkompensationseinrichtung 16 oder die Analyseeinrichtung 17 sind im Ausführungsbeispiel in die numerische Steuerung 10 integriert. Es können aber auch alle der genannten oder ein Teil der genannten Einrichtungen in einer von der numerischen Steuerung 10 verschiedenen Recheneinrichtung implementiert sein. Ferner können die genannten Einrichtungen als Software implementiert sein und beispielsweise auf der gleichen Hardware, insbesondere dem gleichen Prozessor laufen wie die Regelungseinrichtung 11.

## Patentansprüche

1. Verfahren zum Steuern und/oder Regeln eines Industrieroboters (1), aufweisend mehrere bezüglich rotatorischer Achsen (R1 bis R6) und mittels den Achsen (R1 bis R6) zugeordneter Antriebe relativ zueinander verstellbare Einzelkörper (2 bis 8) und einen Endeffektor (9),

    - wobei bei wenigsten einer ersten rotatorischen Achse (R2) wenigstens einmal ein Achswinkel um einen vorgebbaren Winkelbereich verstellt wird,
    - wobei der Endeffektor (9) aufgrund der Verstellung der Achse in einem dem Industrieroboter (1) zugeordneten Koordinatensystem (KS) eine Bewegung entlang einer Bahn ($K_{RE}$, $K_{RS}$) ausführt,
    - wobei bei der Bewegung entlang der Bahn ($K_{RE}$, $K_{RS}$) für eine Vielzahl von Bahnpunkten

        - anhand eines Modells des Industrieroboters (1) ein von dem Antrieb der ersten rotatorischen Achse (R2) aufzubringendes, von dem Achswinkel abhängiges Drehmoment zur Verstellung der Achse (R2) ermittelt wird,
        - eine Abweichung der Position und/oder Orientierung der von dem Endeffektor (9) ausgeführten Bahn ($K_{RE}$, $K_{RS}$) von einer idealen Bahn ($K_I$) in wenigstens einer Richtung des Koordinatensystems (KS) und in Abhängigkeit des Achswinkels und des Drehmoments ermittelt wird,
        - anhand der Abweichung mittels eines inversen Modells des Industrieroboters (1) ein von dem Achswinkel und dem Drehmoment abhängiges Störmoment in der Richtung des Koordinatensystems (KS) ermittelt wird,
        - für wenigstens eine der rotatorischen Achsen (R1 bis R6) des Industrieroboters (1) mittels des Modells des Industrieroboters (1) ein von dem Achswinkel und dem Drehmoment der ersten rotatorischen Achse (R2) abhängiger Korrekturwinkel zur Kompensation des Störmoments ermittelt wird,
        - wobei der Industrieroboter (1) unter Berücksichtigung der in Bezug auf die erste rotatorische Achse (R2) ermittelten Korrekturwinkel betrieben wird.

2. Verfahren nach Anspruch 1, wobei anhand der Abweichung mittels des inversen Modells des Industrieroboters (1) ein von dem Achswinkel und einem normierten Drehmoment abhängiges normiertes Störmoment in der Richtung des Koordinatensystems (KS) ermittelt wird und wobei die Korrekturwinkel in Abhängigkeit der normierten Störmomente ermittelt werden.

3. Verfahren nach Anspruch 1 oder 2, wobei eine Abweichung der Bahn ($K_{RE}$) in Abhängigkeit des Achswinkels in einer durch den Bahnverlauf bestimmten Bewegungsebene, senkrecht zu der jeweiligen Bewegungsrichtung ermittelt wird.

4. Verfahren nach Anspruch 1 oder 2, wobei eine Abweichung der Bahn ($K_{RS}$) in Abhängigkeit des Achswinkels, senkrecht zu einer durch den Bahnverlauf bestimmten Bewegungsebene ermittelt wird.

5. Verfahren nach einem der vorherigen Ansprüche, wobei die Abweichung einer Frequenzanalyse unterzogen wird und für wenigstens eine dominante Wellenlänge ($\lambda_1$, $\lambda_2$, $\lambda_3$) die Amplitude ($A_1$, $A_2$, $A_3$) der Abweichung bestimmt wird.

6. Verfahren nach Anspruch 5, wobei eine normierte Amplitude ($\alpha_1$, $\alpha_2$, $\alpha_3$) der dominanten Wellenlänge ($\lambda_1$, $\lambda_2$, $\lambda_3$)

bestimmt wird.

7. Verfahren nach einem der vorherigen Ansprüche, wobei die Achsen des Industrieroboters (1) ausgehend von einer Roboter-Basis entlang einer kinematischen Kette als Rundachse R1, Rundachse R2 etc. bezeichnet werden, wobei es sich bei der ersten Rundachse um die Rundachse R2 des Industrieroboters (1) handelt.

8. Verfahren nach Anspruch 7, wobei das Verfahren auch für die Rundachse R3 als zweite Rundachse durchgeführt wird.

9. Verfahren nach Anspruch 8, wobei das Verfahren auch für die Rundachse R4 als dritte Rundachse durchgeführt wird.

10. Verfahren nach einem der vorherigen Ansprüche, wobei der Winkelbereich derart gewählt wird, dass beim Verstellen der Achse (R2) um den Winkelbereich ein minimales und ein maximales Drehmoment erfasst werden.

11. Verfahren nach einem der vorherigen Ansprüche, wobei der Antrieb einen Motor und ein Getriebe umfasst und mittels des Verfahrens Rastkräfte des Getriebes kompensiert werden.

12. Industrieroboter (1), aufweisend mehrere bezüglich rotatorischer Achsen (R1 bis R6) und mittels den Achsen (R1 bis R6) zugeordneter Antriebe relativ zueinander verstellbare Einzelkörper (2 bis 8) und einen Endeffektor (9), umfassend

- eine Regelungseinrichtung (11) zur geregelten Verstellung des Achswinkels wenigsten einer ersten rotatorischen Achse (R2) um einen vorgebbaren Winkelbereich, wobei der Endeffektor (9) aufgrund der Verstellung der Achse (R2) in einem dem Industrieroboter (1) zugeordneten Koordinatensystem (KS) eine Bewegung entlang einer Bahn ($K_{RE}$, $K_{RS}$) ausführt,
- eine Drehmomentermittlungseinrichtung (12) zum Ermitteln eines von dem Antrieb aufzubringenden, von dem Achswinkel abhängigen Drehmoments zur Verstellung der Achse (R2) anhand eines Robotermodells,
- eine Messeinrichtung (13) zum Ermitteln einer achswinkelabhängigen Abweichung des Endeffektors (9) von einer idealen Bahn ($K_I$) bei der Bewegung des Endeffektors (9) entlang der Bahn ($K_{RE}$, $K_{RS}$),
- eine Störmomentermittlungseinrichtung (14), die anhand einer Abweichung der Bahn ($K_{RE}$, $K_{RS}$) mittels eines inversen Modells des Industrieroboters (1) einen von dem Achswinkel und dem Drehmoment abhängigen Störmomentverlauf ermittelt,
- eine Korrekturwinkelermittlungseinrichtung (15) zum Ermitteln von Korrekturwinkeln für wenigstens eine der rotatorischen Achsen (R1 bis R6) des Industrieroboters (1) in Abhängigkeit von dem Achswinkel und dem Drehmoment der ersten rotatorischen Achse (R2) und in Abhängigkeit des Störmomentverlaufs,
- eine Störmomentkompensationseinrichtung (16), mittels der während des Betriebs des Industrieroboters (1) Störmomente des Antriebs durch die Regeleinrichtung unter Berücksichtigung der Korrekturwinkel kompensierbar sind.

13. Industrieroboter (1) nach Anspruch 12, wobei der Antrieb einen Motor und ein Getriebe umfasst und mittels der Störmomentkompensationseinrichtung (16) Rastkräfte des Getriebes kompensierbar sind.

14. Industrieroboter (1) nach Anspruch 12, wobei mittels der Störmomentermittlungseinrichtung (16) normierte Störmomente ermittelbar sind.

15. Industrieroboter (1) nach einem der Ansprüche 12 bis 14, umfassend eine Analyseeinrichtung (17), mittels der die Abweichung einer Frequenzanalyse unterziehbar ist und für wenigstens eine dominante Wellenlänge ($\lambda_1$, $\lambda_2$, $\lambda_3$) die Amplitude ($A_1$, $A_2$, $A_3$) der Abweichung bestimmbar ist.

16. Industrieroboter (1) nach Anspruch 15, wobei eine normierte Amplitude ($\alpha_1$, $\alpha_2$, $\alpha_3$) der Abweichung bestimmbar ist.

FIG 1

FIG 2

# FIG 3

Abweichung [mm]
zur Kreisebene

Winkel [°]

Abweichung [mm]
in Kreisebene

Winkel [°]

Drehmoment [Nm]

Winkel [°]

# FIG 4

EP 3 287 244 A1

FIG 5

EP 3 287 244 A1

FIG 6

FIG 7

FIG 8

Europäisches
Patentamt

European
Patent Office

Office européen
des brevets

**EUROPÄISCHER RECHERCHENBERICHT**

Nummer der Anmeldung

EP 16 18 5877

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/76830 A1 (ABB AB [SE]; GUNNARSSON SVANTE [SE]; NORRLOF MIKAEL [SE]; HOVLAND GEIR) 18. Oktober 2001 (2001-10-18) | 1-4,7-14 | INV. B25J9/16 |
| Y | * Seite 2, Zeile 9 - Seite 7, Zeile 15 *<br>* Seite 12, Zeile 25 - Seite 13, Zeile 20 *<br>* Seite 16, Zeile 24 - Seite 19, Zeile 25 * | 5,6,15,16 | |
| Y | JP 2009 061519 A (PANASONIC CORP) 26. März 2009 (2009-03-26) | 5,6,15,16 | |
| A | * Absätze [0001] - [0081], [0094] - [0101] * | 1,2,7-11 | |
| A | DE 10 2016 002933 A1 (DAIMLER AG [DE]) 25. August 2016 (2016-08-25)<br>* Absätze [0006] - [0010], [0012], [0013], [0022] - [0029] * | 1-16 | |
| A | US 2015/326163 A1 (YAMAGUCHI TAKASHI [JP] ET AL) 12. November 2015 (2015-11-12)<br>* Absätze [0002] - [0020] * | 1,5,6,12,15,16 | |
| A | TOSHIO HIRAIDE ET AL: "Acceleration control of AC servo motor considering cogging torque at low velocities for haptics",<br>INDUSTRIAL ELECTRONICS (ISIE), 2012 IEEE INTERNATIONAL SYMPOSIUM ON, IEEE,<br>28. Mai 2012 (2012-05-28), Seiten 1668-1673, XP032199956,<br>DOI: 10.1109/ISIE.2012.6237341<br>ISBN: 978-1-4673-0159-6<br>* Abschnitte I-III * | 1,2,5,6,11-16 | |

**RECHERCHIERTE SACHGEBIETE (IPC)**

B25J
G05B

Der vorliegende Recherchenbericht wurde für alle Patentansprüche erstellt

| Recherchenort | Abschlußdatum der Recherche | Prüfer |
|---|---|---|
| Den Haag | 1. März 2017 | Prokopiou, Platon |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 16 18 5877

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2017

| Im Recherchenbericht angeführtes Patentdokument | Datum der Veröffentlichung | Mitglied(er) der Patentfamilie | Datum der Veröffentlichung |
|---|---|---|---|
| WO 0176830 A1 | 18-10-2001 | AT 365096 T<br>AU 4895001 A<br>DE 60129009 T2<br>EP 1274546 A1<br>JP 2003530230 A<br>US 2004093119 A1<br>WO 0176830 A1 | 15-07-2007<br>23-10-2001<br>06-03-2008<br>15-01-2003<br>14-10-2003<br>13-05-2004<br>18-10-2001 |
| JP 2009061519 A | 26-03-2009 | JP 4998159 B2<br>JP 2009061519 A | 15-08-2012<br>26-03-2009 |
| DE 102016002933 A1 | 25-08-2016 | KEINE | |
| US 2015326163 A1 | 12-11-2015 | CN 104838322 A<br>JP 5532115 B1<br>JP 2014115746 A<br>KR 20150084041 A<br>US 2015326163 A1<br>WO 2014088054 A1 | 12-08-2015<br>25-06-2014<br>26-06-2014<br>21-07-2015<br>12-11-2015<br>12-06-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- EP 2954986 A1